# EUROPEAN PATENT SPECIFICATION

(11) **EP 2 211 501 B1**
(45) Date of publication and mention of the grant of the patent: **01.10.2014**
(21) Application number: 09810983.8
(22) Date of filing: 19.05.2009
(51) Int. Cl.: H04L 12/24, G06F 17/30, H04L 29/08

(54) **Method and server for performing secondary operation on web page**
Verfahren und Server zur Durchführung einer Sekundär-Operation auf einer Webseite
Procédé et serveur pour effectuer une opération secondaire sur une page web

(30) Priority: 05.09.2008 CN 200810212222
(43) Date of publication of application: 28.07.2010
(73) Proprietor: Huawei Technologies Co., Ltd., Longgang District, Shenzhen Guangdong 518129 (CN)
(72) Inventor: XU, Yufeng, Longgang district 518128, Shenzhen (CN)
(74) Representative: Kreuz, Georg Maria
(86) International application number: PCT/CN2009/000546
(87) International publication number: WO 2010/025608

(56) References cited:
- CN-A- 1 808 439
- CN-A- 1 929 399
- US-A1- 2003 023 754
- US-A1- 2004 073 713
- ISAACS S: "Inside Technique : Tell a Friend" INTERNET CITATION 6 February 2003 (2003-02-06), XP002230308 Retrieved from the Internet: URL:www.siteexperts.com/tips/backend/ts17/ page1.asp [retrieved on 2003-02-06]

## Description

### FIELD OF INVENTION

The present invention relates to a technical field of network communication, and in particular, to a method, system, and device for secondary operation on webpage.

### BACKGROUND

As Internet technology advances, Internet applications boom and are characterized by user experience, resource sharing, collective thinking, and open platform. A host of excellent applications emerge, such as Bookmark and Digg.

Bookmark is intended for users to mark an item, for example, add a word or phrase. Users can label the bookmarks they have collected and navigate web pages that contain a keyword tag. With the increasing bookmarks used by the user, users will generate more value. Various tags enable users to find bookmarks that meet their needs.

Bookmarks have tremendous impact on the way individual users obtain information from the Internet and on the dissemination and innovation of Internet content.

Conventional art integrates Internet Explorer (IE) and Firefox as plug-ins into a browser. Users can click the Collect button to label useful webpages and create a bookmark, which will be stored on the Internet.

As bookmarks cannot be integrated to each website but collected by integrating them into a browser as a plug-in, users need to reinstall the plug-in when reinstalling their operating system, replace their browser or access the Internet in another place. Moreover, bookmark applications are readily reproducible. Currently, more than 100 similar applications are available on the Internet. As a result, users are distributed across numerous bookmark websites. Further, few mobile phones support the bookmark plug-in.

As a popular Web2.0 application, Digg allows users to edit and vote on news. The application is primarily designed for the general public to dig news. Unlike other news websites, whose news is recommended by editors depending on their preference, Digg offers Internet users the freedom to select news through voting and determine headlines that appear on the homepage. Digg trusts the selection and review by the general public. News selected this way usually creates the most value and reflects the key concerns of Internet users. No similar applications are available on the wireless Internet. The radio capability only provides Internet access and its value remains largely untapped.

Digg gives the right to select news to Internet users, who explore news and determine the news to be displayed on the homepage through voting. News selected this way usually creates the most value and reflects the key concerns of Internet users.

However, as Digg cannot be integrated into each website, users have to edit news by hand and then upload the news to the Digg website for voting. This complicates operations for users. Moreover, Digg is also readily reproducible. Currently, many similar applications are available on the Internet. As a result, users are distributed across a number of websites.

US 2004/0073713 A1 provide a method for mobile terminals to request WAP content from a network. The network comprises a gateway via which a mobile terminal having a display can access a plurality of content servers each having stored therein content pages. The network is run by a network operateor. The mobile terminal sends a request to the gateway for a content page to be provided by one of the content servers and the gateway obtains the content page and provides it to the mobile terminal. Before doing this, the gateway uses a WAP content proxy to insert into the content page a link to a home page of the network operator which thus enables a user of the mobile terminal always to have presented a link option go to the network operator's home page.

XP002230308 "Inside Technique : Tell a Friend" (http://www.siteexperts.com/tips/backend/ts17/page1.asp) describes a feature called "Tell a friend". The "Tell a Friend" feature makes it easy to send an e-mail to a friend recommending an article on a site. "Tell a Friend" works through special links on the web-page. When this link is clicked on, the users are taken to a web-page where the users can recommend the page to a friend or co-worker.

### SUMMARY

One embodiment of the present invention provides a method and device for secondary operation on webpage, to centrally operate and manage webpages, thus adding value to these webpages.

The present embodiment further provides a method of secondary operation on webpage, comprising:
receiving, by a receiving module of a content management server, from the terminal request messages that contain the terminal ID and the Uniform Resource Locator (URL) the terminal currently visits;
generating, by a webpage generating module of the content management server, a webpage according to the title of the currently visited URL and returning the webpage to the terminal;
setting, by the terminal, information on the generated webpage; and
performing, by a performing module of the content management server, secondary operation on the webpage that corresponds to the currently visited URL according to the information the terminal sets on the webpage, wherein the secondary operation is collecting or reporting;
wherein if the request message is a collect request or report request, the information which the terminal sets on the generated webpage comprises at least one of: the ID of the terminal, title, website address, remarks, tag, webpage operation type and user storage time;
wherein performing, by the performing module of the content management server, the secondary operation on the webpage corresponding to the currently visited URL according to the information which the terminal sets on the generated webpage comprises:
   storing, by a content management submodule of the content management server, the webpage corresponding to the currently visited URL that is collected or reported by the terminal;
   the method further comprising:
      retrieving, by a ranking module of the content management server, links of the stored webpages corresponding to the currently visited URL on which the secondary operation is performed;
      ranking, by the ranking module of the content management server, the links according to the number of the link repetitions; and
      presenting, by a integrated webpage generating module of the content management server, these links on one webpage to generate an integrated webpage.

The present embodiment further provides a content management server, comprising:
a receiving module, adapted to receive from a terminal request messages that contain the terminal ID and the URL the terminal currently visits;
a webpage generating module, adapted to generate a webpage according to the title of the currently visited URL and return the webpage to the terminal which is configured to set information on the generated webpage; and
a performing module, adapted to perform a secondary operation on the webpage that corresponds to the currently visited URL according to the information the terminal sets on the webpage, wherein the secondary operation is collecting or reporting;
wherein the performing module comprises:
   a content management submodule, configured to manage content of the webpage, and store the webpage corresponding to the currently visited URL that is collected or reported by the terminal after receiving a collect or report request from the terminal;
   the content management server further comprising:
      a ranking module, configured to retrieve links of the stored webpages on which the secondary operation is performed stored on the content management server and rank the links according to the number of the link repetitions; and
      an integrated webpage generating module, configured to display the links ranked by the ranking module on a webpage to form an integrated webpage.

An embodiment of the present invention outperforms prior art in the following ways: Through the embodiment, WAPGW adds a script for secondary operation to a webpage, enabling a terminal to perform a secondary operation on the script-equipped webpage; the content management server centrally manages webpages, eliminating the need for the terminal to switch between platforms while operating on webpages from a number of websites. In this way, the embodiment supports secondary operations on webpages from different websites through fewer operations, thus enhancing user experience and improving the efficiency for users to browse Internet information.

### BRIEF DESCRIPTION OF THE DRAWINGS

In order to clarify the embodiments of the present invention, the following section provides the drawings necessary for the description of these embodiments or solutions. It is apparent that the following drawings only represent some embodiments of the present invention. Those skilled in the art are able to derive other drawings from these ones without innovations.
FIG. 1 shows a flowchart for a method of secondary operation on webpage provided in an embodiment of the present invention;
FIG. 2 shows a flowchart for another method of secondary operation on webpage provided in an embodiment of the present invention;
FIG. 3 shows a flowchart for another method of secondary operation on webpage provided in an embodiment of the present invention;
FIG. 4 shows a flowchart for a method of secondary operation on webpage provided in an embodiment of the present invention;
FIG. 5 shows a flowchart for the content management server provided in an embodiment of the present invention to initiate requests;
FIG. 6 shows a flowchart for the content management server provided in an embodiment of the present invention to generate a webpage;
FIG. 7 shows a flowchart for another method of secondary operation on webpage provided in an embodiment of the present embodiment;
FIG. 8 shows another flowchart for the content management server provided in an embodiment of the present invention to initiate requests;
FIG. 9 shows a flowchart for the content management server provided in an embodiment of the present invention to generate webpages;
FIG. 10 shows a flowchart for another method of secondary \operation on webpage provided in an embodiment of the present embodiment;
FIG. 11 shows another flowchart for the content management server provided in an embodiment of the present invention to initiate requests;
FIG. 12 shows another flowchart for the content management server provided in an embodiment of the present invention to generate webpages;
FIG. 13 shows a flowchart for another method of secondary operation on webpage provided in an embodiment of the present embodiment;
FIG. 14 shows a flowchart for the content management server provided in an embodiment of the present invention to integrate webpages;
FIG. 15 shows the structure of the system provided in an embodiment of the present invention for secondary webpage operation;
FIG. 16 shows the structure of the WAPGW provided in Embodiment 3 of the present invention; and
FIG. 17 shows the structure of the content management server provided in Embodiment 3 of the present invention.

### DETAILED DESCRIPTION

Based on the drawings provided in the embodiments herein, the following section will fully and clearly describe the technical solutions specified in the embodiments of the present invention. Obviously, the embodiments described herein form only part of the embodiments of the present invention.

An embodiment of the present invention provides a method for secondary operation on webpage, adapted to perform a secondary operation on webpage on the wireless Internet to add value. In an embodiment of the present invention, users do not need to switch across platforms while operating on webpages from different websites. Instead, they can perform a secondary operation on these webpages through simplified procedures, such as collection, recommendation, voting, giving opinions and comments or reporting. The embodiment enhances user experience, improves users' efficiency in browsing Internet information, and enables users to share Internet information with others swiftly.

FIG. 1 shows a flowchart for a method of secondary operation on webpage provided in an embodiment of the present invention, comprising:
Step S101: Obtaining a webpage requested by a terminal.
Step S102: Adding scripts for secondary operations on webpage to the webpage.

The scripts for secondary operation on webpage include one or more scripts adapted to recommend, collect, vote on, report, and comment on said webpage.

Specifically, adding scripts for secondary operation on webpage to the webpage comprises:
using Referer contained in the header of Hypertext Transfer Protocol (HTTP) to add a script for secondary operation on webpage to the webpage; or
taking the URL that the terminal currently visits as a transferring parameter and adding a script for secondary operation on webpage to the webpage.

Step S103: Returning a webpage added with the script to the terminal for the terminal to perform a secondary operation on the webpage.

Specifically, a terminal performs secondary operation on a script-added webpage as follows: The terminal sends a request message to a content management server. The message contains terminal ID and the URL (Uniform Resource Location, Uniform Resource Locator) that the terminal currently visits.

As described in the method for secondary operation on webpage, the WAPGW adds a script for secondary operation on webpage to the webpage, enabling the terminal to perform a secondary operation on the script-equipped webpage and thus adding value to the webpage and enhancing user experience.

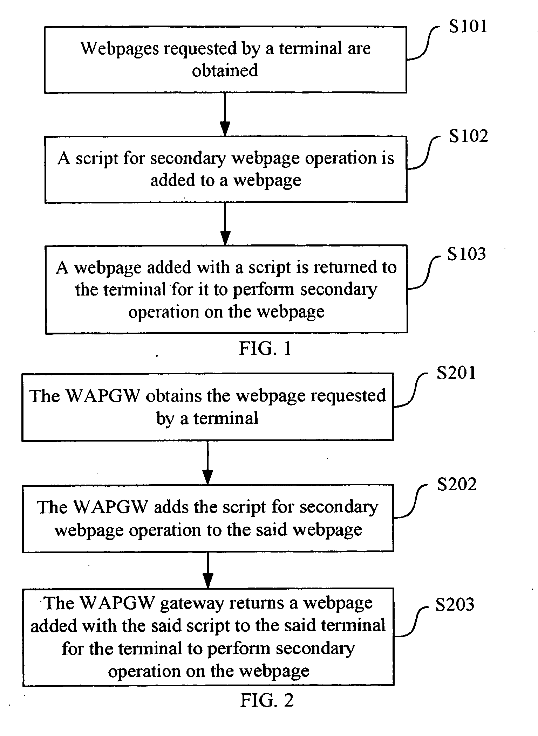

FIG. 2 shows a flowchart for a method of secondary operation on webpage provided in an embodiment of the present invention, comprising:
Step S201: The WAPGW obtains the webpage requested by a terminal.
Step S202: The WAPGW adds the script for secondary operation on webpage to the webpage.

Specifically, if the URL of the webpage differs from the address of the content management server, the WAPGW adds a script for secondary operation on webpage to the webpage.

Namely, the script for secondary operation on webpage is added to the webpage if the webpage requested by the terminal is not a webpage on the content management server; the script for secondary operation on webpage is not added to the webpage if the webpage requested by the terminal is a webpage on the content management server.

The scripts for secondary operations on webpage include one or more scripts adapted to recommend, collect, vote on, report, and comment on said webpages.

Specifically, adding scripts for secondary webpage operations to the webpage comprises:
using Referer contained in the header of Hypertext Transfer Protocol (HTTP) to add a script for secondary operation to the webpage; or
transferring the URL that the terminal currently visits as a parameter and adding a script for secondary webpage operations to the webpage.

Step S203: The WAPGW returns a webpage added with the script to the terminal for the terminal to perform a secondary operation on the webpage.

The script involved in the secondary operation may contain the address of the content management server and the type of secondary operation. Such script is intended for the terminal to perform a secondary operation on the webpage according to the address and type of the secondary operation.

For example, a script for secondary operation shown below is added:

```
     <body>
     ...
     ...
     <a href="http.//www.51tuijian.com/send?currentlyvisiturl">Collect</a>
     </body>
```

wherein:
http://www.51tuijian.com represents the address of the content management server and the Collect parameter indicates the type of secondary operation. This means that the terminal can store the webpage to the content management server.

Specifically, a terminal performs secondary operation on a script-added webpage as follows: The terminal sends a request message to the content management server according to the address of the content management server. The message contains terminal ID and the URL (Uniform Resource Location, Uniform Resource Locator) that the terminal currently visits.

As described in the method for secondary webpage operation, the WAPGW adds a script for secondary webpage operation to the webpage, enabling the terminal to perform a secondary operation on the script-added webpage and thus adding value to the webpage and enhancing user experience.

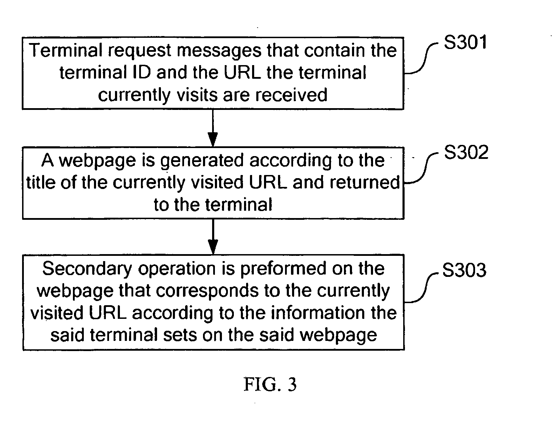

FIG. 3 shows a flowchart for another method of secondary operation on webpage provided in an embodiment of the present invention, comprising:
Step S301: Receiving from the terminal a request message that contains the terminal ID and the URL the terminal currently visits.
Step S302: Generating a webpage according to the title of the currently visited URL and returning the webpage to the terminal.
Step S303: Performing secondary operation on the webpage that corresponds to the URL currently visited according to the information that the terminal sets on the webpage generated in step S302.

When recommending webpages corresponding to the currently visited URL, the terminal sets the following information on the webpages generated in step S302: contact, way of sending information and recommended content. The content management server sends the recommended content to the contact set by the terminal.

When the terminal collects or reports webpages corresponding to the currently visited URL, the information set by the terminal on these webpages generated in step S302 is as follows: terminal ID, title, website, remarks, tag, webpage operation type and user storage time. At this point, the content management server stores the webpages collected or reported by the terminal.

In the present invention, the content management server retrieves links of webpages on which the secondary operation is performed stored on the server, and ranks the links according to the number of the link repetitions, and presents these links on one webpage to generate an integrated webpage.

As described in the method for secondary operation on webpage, the content management server centrally manages webpages for secondary operation, thus enhancing the integration of these webpages. By eliminating the need to switch between platforms, this method simplifies webpage operations, enhances user experience, and improves users' efficiency in browsing Internet information.

One embodiment of the present invention allows users to perform the following operations in addition to "recommend": collect, vote, report, give opinions or comments.

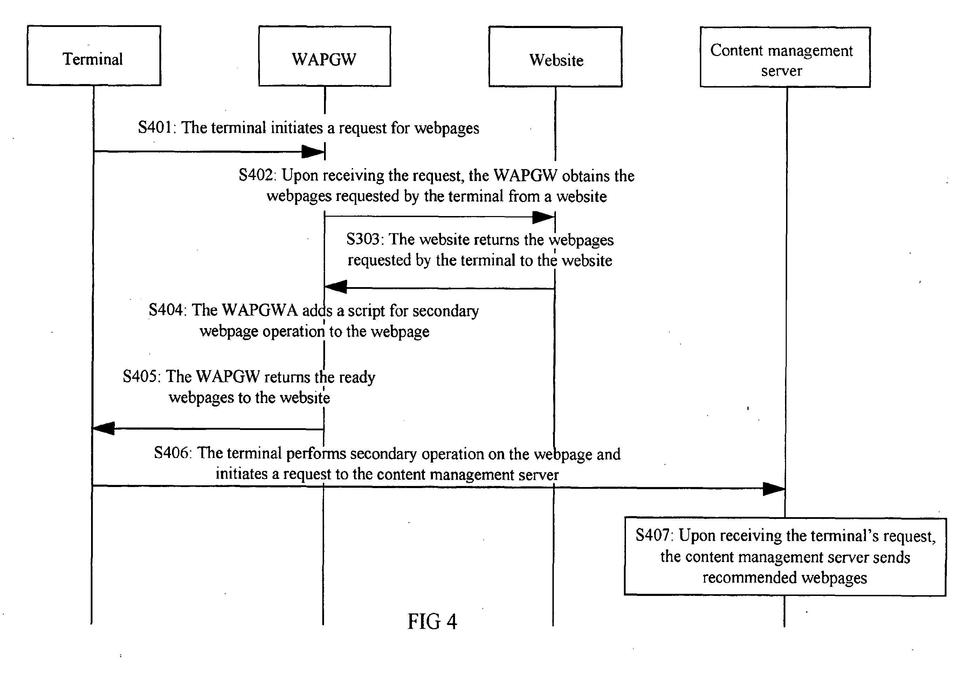

FIG. 4 shows a flowchart for a method of secondary operation on webpage provided in an embodiment of the present invention, comprising:
Step S401: The terminal initiates a request for a webpage.
Step S402: Upon receiving the request, the WAPGW obtains the webpage requested by the terminal from a website.
Step S403: The website returns the webpage requested by the terminal to the WAPGW.
Step S404: The WAPGW adds scripts, for example, Recommend script, for secondary operations on webpage to the webpage.

Described below is an example of how the WAPGW implements the method based on WAP2.0 protocol by using Referer contained in the http head, specifically:
Referer:http://currentlyvisiturl

```
     <body>
     ...
     ...
     <a href="http://www.51tuijian.com">Recommend</a>
     </body>
```

wherein:
the <a> tag indicates that a Recommend link is added to the webpage; http://www.51tuijian.com represents the address of the content management server, which is configurable.

Step S405: The WAPGW returns the webpage added with the scripts to the terminal;
Step S406: The terminal performs secondary operation on the webpage and initiates a recommend request to the content management server. The request contains the following fields: user ID and URL which the user currently visits, wherein the user ID can be the user's mobile number; and
Step S407: Upon receiving the terminal's request, the content management server sends recommended webpages. The content management server can send content through the following channels: WAP push (WAPPUSH), Short Messaging Service (SMS), Electronic-Mail (Email), Multimedia Messaging Service (MMS) or Instant Messaging (IM).

Additionally, to add "Recommend" function to designated webpages, an embodiment of the present invention supports the insertion of recommended content according to given rules. A simpler method of implementation is to make URL blacklist and whitelist or configure specific websites addresses indicating whether the secondary operations on the webpage are permitted or prohibited.

As described in the method for secondary operation on webpage, the WAPGW adds a script for recommend operation to webpages, enabling the terminal to perform a secondary operation on webpages added with the recommend operation script and thus adding value to the webpage and enhancing user experience.

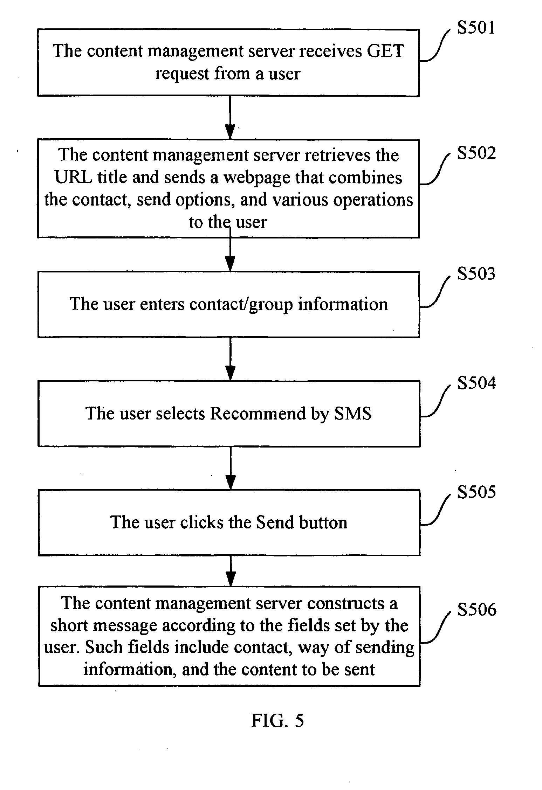

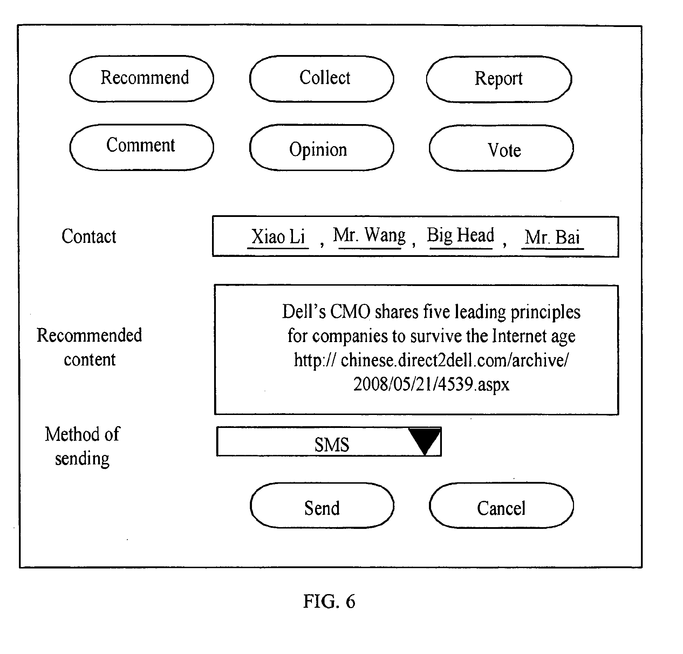

FIG. 5 shows a flowchart for the content management server provided in an embodiment of the present invention to initiate requests, comprising:
Step S501: The content management server receives GET request from a user. The GET request contains the user ID and the URL that the user currently visits, wherein the user ID may be the user's mobile number.
Step S502: The content management server retrieves the URL title and generates a webpage that includes the contact, send options, and various operations option to the user. FIG. 6 shows such a webpage.
Step S503: The user enters contact/group information.
Step S504: The user selects the Recommend by SMS option.
Step S505: The user clicks the Send button.
Step S506: The content management server constructs a short message according to the fields set by the user. Such fields include contact, way of sending information, and the content to be sent. Specifically, the constructed message can be CMPP¬_SUBMIT. The message can take a format as shown in Table 1.

**Table 1**

| | |
|---|---|
| Src_Id | Number of the sender's mobile phone |
| Dest_terminal_Id | Mobile numbers of contacts (multiple) |
| Msg_Content | Recommended content |

After sending CMPP¬_SUBMIT, the content management server waits for CMPP¬_SUBMIT_RESP. The content management server indicates to the user that the recommendation succeeds if the message is sent successfully.

As described in the method for secondary webpage operation, the content management server sends webpages recommended by users and centrally manages these webpages, thus enhancing the integration of these webpages, and eliminating the need to switch between platforms. This method performs recommendation operation on webpages from different websites, through a simplified process, enhances user experience, and improves users' efficiency in browsing Internet information.

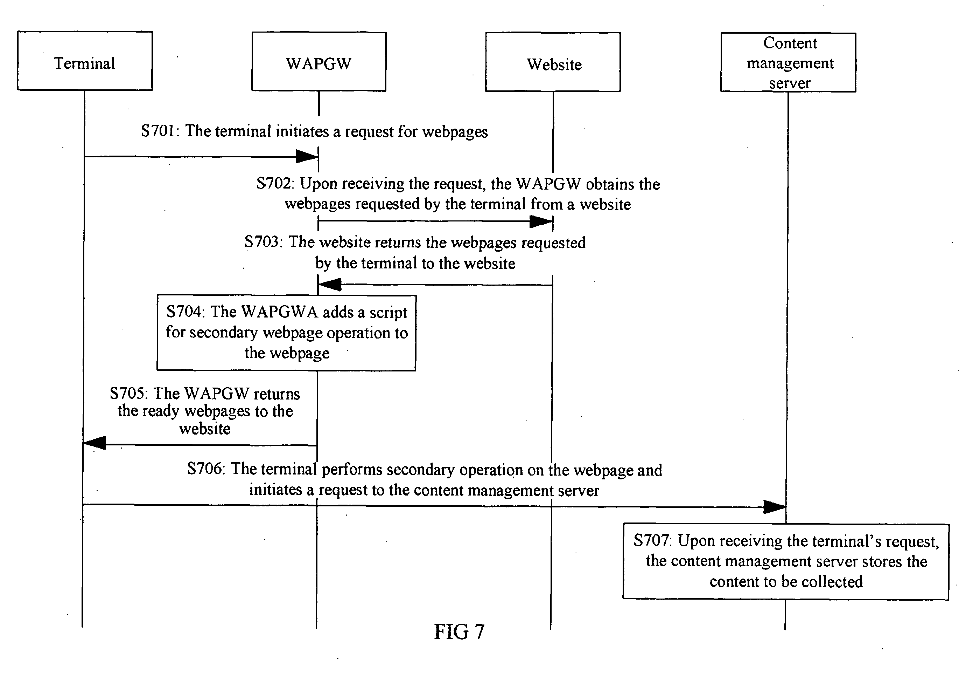

FIG. 7 shows a flowchart for another method of secondary webpage operation provided in an embodiment of the present invention, comprising:
Step S701: The terminal initiates a request for webpage.
Step S702: Upon receiving the request, the WAPGW obtains the webpage requested by the terminal from a website.
Step S703: The website returns the webpage requested by the terminal to the WAPGW.
Step S704: The WAPGW adds scripts, for example, Collect script, for secondary operations on webpage to the webpage.

Described below is an example of how the WAPGW implements the method based on WAP2.0 protocol by transferring the currently visited address as a parameter, specifically:

```
     <body>
     ...
     ...
     <a href="http://www.51tuijian.com/send?currentlyvisiturl">Collect</a>
     </body>
```

wherein:
the sent parameter currentlyvisiturl represents the currently visited URL.

Step S705: The WAPGW returns the webpage added with the scripts to the terminal.
Step S706: The terminal performs secondary operation on webpage and initiates a request to the content management server. The request contains the following fields: user ID and URL which the user currently visits, wherein the user ID can be the user's mobile number.
Step S707: Upon receiving the terminal's request, the content management server stores the content to be collected.

As described in the method for secondary webpage operation, the WAPGW adds a script for collect operation to webpages, enabling the terminal to perform collect operation on webpage added with the collect operation script and thus adding value to the webpage and enhancing user experience.

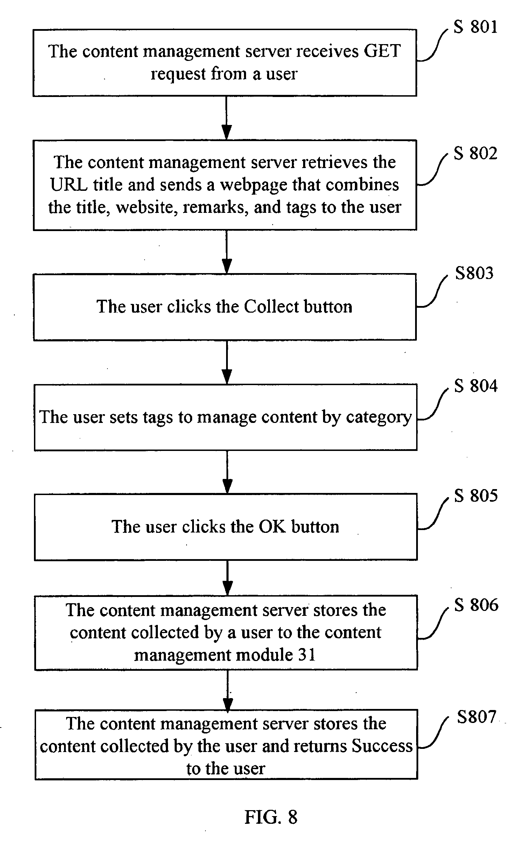

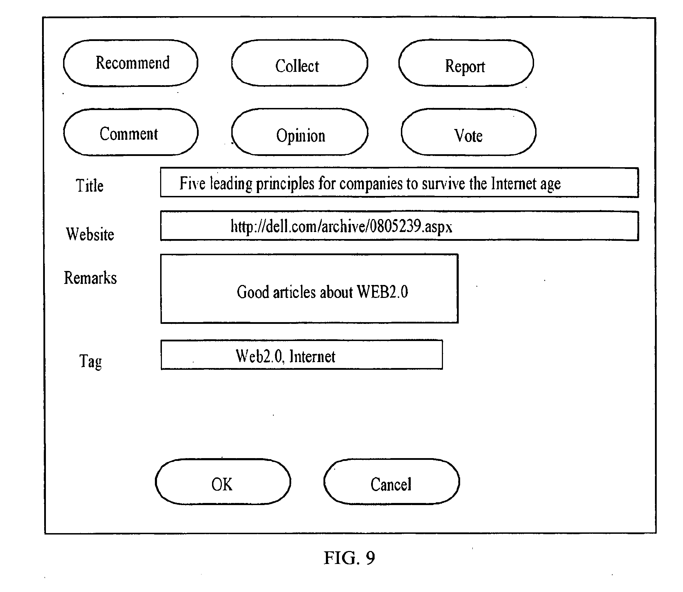

FIG. 8 shows another flowchart for the content management server provided in an embodiment of the present invention to initiate requests, comprising:
Step S801: The content management server receives GET request from a user. The GET request contains the user ID and the URL that the user currently visits, wherein the user ID may be the user's mobile number.
Step S802: The content management server retrieves the URL title and generates a webpage that includes the title, website, remarks, and tags to the user. FIG. 9 shows such a webpage.
Step S805: The user clicks the Collect button.
Step S804: The user sets tags to manage content by category.
Step S805: The user clicks the OK button.
Step S806: The content management server stores the content collected by the user. Table 2 describes the fields contained in the stored content.

**Table 2**

| | | | | | | |
|---|---|---|---|---|---|---|
| User ID | Title | Website | Remarks | Tag | Webpage Operation Type | User Store Time |

In an embodiment of the present invention, webpage operation type is Collect.
Step S807: The content management server stores the content collected by the user and returns Success to the user.

As described in the method for secondary operation on webpage, the content management server stores webpages collected by users and centrally manages these webpages according to the information set by the user, thus enhancing the integration of these webpages, and eliminating the need to switch between platforms. This method performs collection operation on webpage from different websites, through a simplified process, enhances user experience, and improves users' efficiency in browsing Internet information.

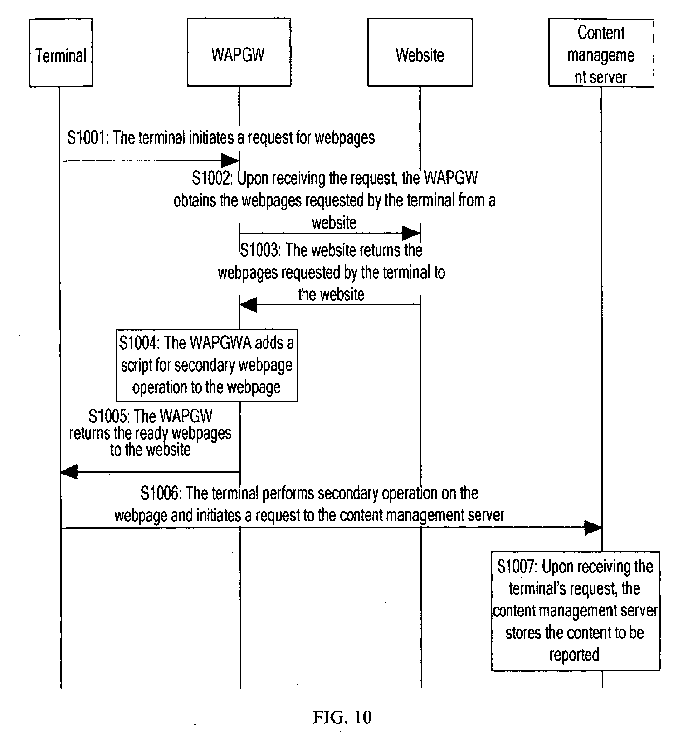

FIG. 10 shows another flowchart for another method of secondary webpage operation provided in an embodiment of the present invention, comprising:
Step S1001: The terminal initiates a request for webpage.
Step S1002: Upon receiving the request, the WAPGW obtains the webpage requested by the terminal from a website.
Step S1003: The website returns the webpage requested by the terminal to the WAPGW.
Step S1004: The WAPGW adds scripts, for example, Report script, for secondary operations on webpage to the webpage.

Described below is an example of how the WAPGW implements the method based on WAP2.0 protocol, specifically:

```
     <wml>
     <card>
       ...
       ...
             <p><a
             href="http://www.51tuijian.com/send?currentlyvisiturl">Report</a></p>
             </card>
            - </wml>
```

Step S1005: The WAPGW returns the webpage added with the scripts to the terminal.
Step S1006: The terminal performs secondary operations on the webpage and initiates a request to the content management server. The request contains the following fields: user ID and URL the user currently visits, wherein the user ID can be the user's mobile number.
Step S1007: Upon receiving the terminal's request, the content management server stores the content to be reported.

As described in the method for secondary operation on webpage, the WAPGW adds a script for report operation to webpage, enabling the terminal to perform collect operation on webpages added with the report operation script and thus adding value to the webpage and enhancing user experience.

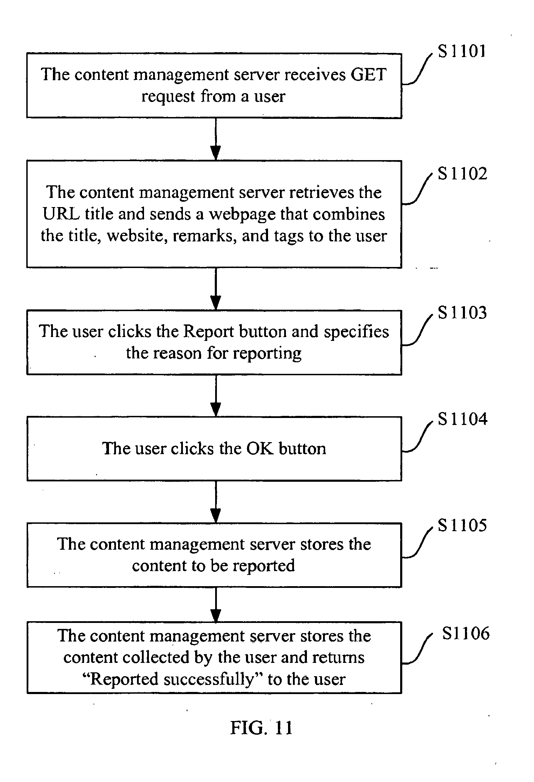

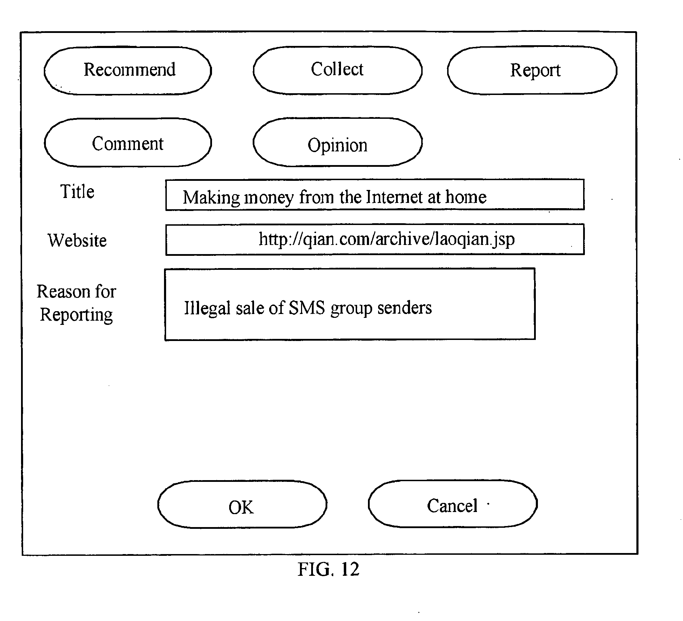

FIG. 11 shows another flowchart for the content management server provided in an embodiment of the present invention to initiate requests, comprising:
Step S1101: The content management server receives GET request from a user. The GET request contains the user ID and the URL that the user currently visits, wherein the user ID may be the user's mobile number.
Step S1102: The content management server retrieves the URL title and generates a webpage that includes the title, website address, and reason for reporting to the user. FIG. 12 shows such a webpage.
Step S1103: The user clicks the Report button and specifies the reason for reporting.
Step S1104: The user clicks the OK button.
Step S1005: The content management server stores the content to be reported. The stored content contains fields as shown in Table 3:

**Table 3**

| | | | | | |
|---|---|---|---|---|---|
| User ID | Title | Website | Reason for Reporting | Webpage Operation Type | User Store Time |

In an embodiment of the present invention, webpage operation type is Report.
Step S1106: The content management server stores the content collected by the user and returns "Reported successfully" to the user.

As described in the method for secondary webpage operation, the content management server stores webpages reported by users and centrally manages these webpages, thus enhancing the integration of these webpages, and eliminating the need to switch between platforms. This method performs reporting operation on webpages from different websites, through a simplified process, enhances user experience, and improves users' efficiency in browsing Internet information.

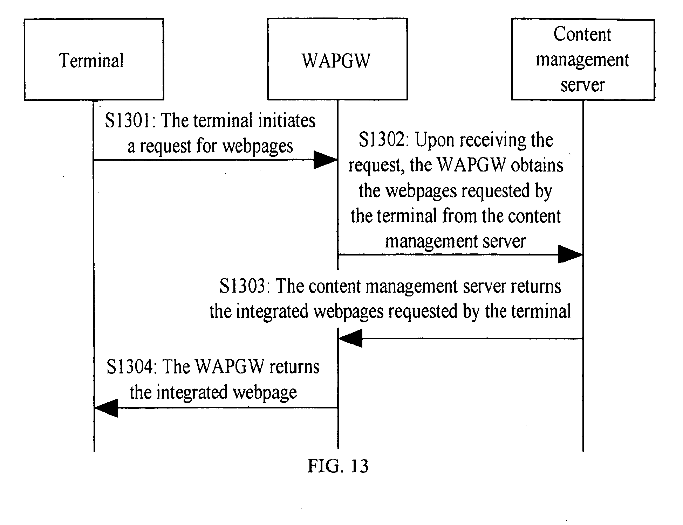

FIG. 13 shows another flowchart for another method of secondary operation on webage provided in an embodiment of the present invention, comprising:
Step S1301: The terminal initiates a request for webpage.
Step S1302: Upon receiving the request, the WAPGW obtains the webpage requested by the terminal from the content management server.
Step S1303: The content management server returns the integrated webpage requested by the terminal.

Described below is the procedure, through which the content management server returns integrated content requested by a terminal by using a list of this week's popular bookmarks for example.

The content management server retrieves links to various webpages on which the secondary operations are performed stored in the database of the content management server and ranks the links in descending order according to the number of link repetitions. Below is the specific procedure:
The content management server summarizes all the links of recommended and collected webpages today or within this week and ranks these links in descending order according to the number of link repetitions.

Optionally, the content management server summarizes all the links of the reported webpage and ranks these links in descending order according to the number of link repetitions.

Optionally, the content management server ranks the top 10 links of collected bookmarks in each category in descending order according to the number of repetitive links.

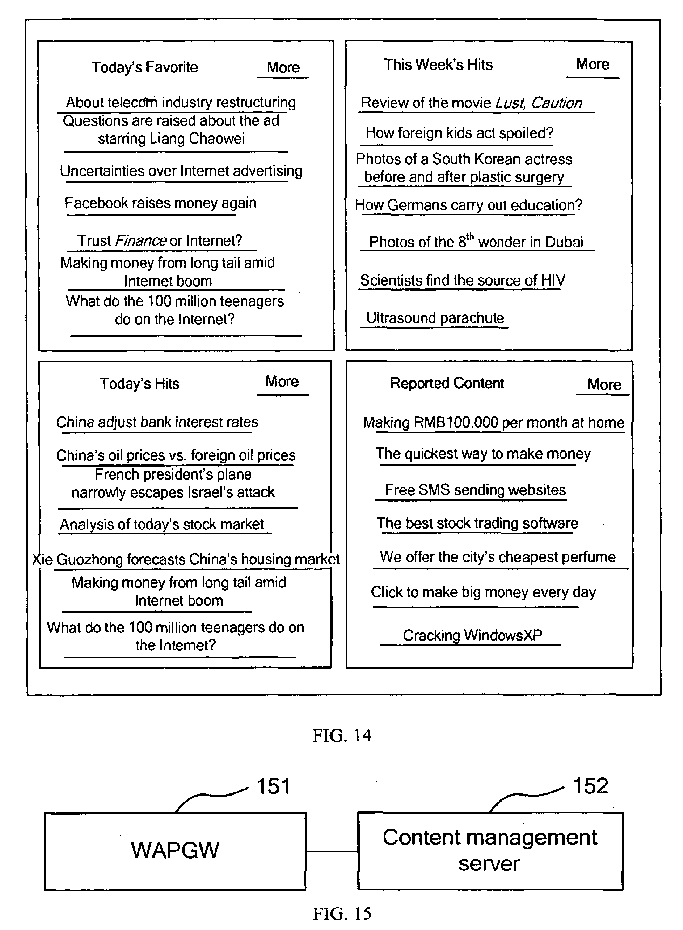

Then, the content management server displays all these links on one webpage as shown in FIG. 14.
Step S1304: The WAPGW returns the integrated webpage to the terminal.

As described in the method for secondary operation on webpage, the content management server displays links of the webpages on which the secondary operations are performed on one webpage to form an integrated webpage, thus centrally managing webpages, and enhancing the integration of these webpages, and eliminating the need to switch between platforms. This method performs the secondary operation on webpage, enhances user experience, and improves users' efficiency in browsing Internet information.

FIG. 15 shows the structure of the system for secondary operation on webpage in an embodiment of the present invention, comprising: WAPGW 151 and content management server 152.

The WAPGW 151 is adapted to obtain the webpage requested by a terminal, add a script used for secondary operation to the webpage, and return a webpage added with the script for the terminal to perform a secondary operation on the webpage.

The content management server 152 is adapted to receive from a terminal request message that contains the ID and a currently visited URL of the terminal, generate a webpage according to the title of the ULR that the terminal currently visits, return the webpage to the terminal, and perform a secondary operation on the webpage that corresponds to the currently visited URL according to the information that the terminal sets on the returned webpage.

As described in the system for secondary webpage operation, WAPGW151 adds a script for secondary operation to the webpage, enabling the terminal to perform a secondary operation on webpage added with the script. The content management server 152 centrally manages webpages, thus enhancing the integration of these webpages. By eliminating the need to switch between platforms, this system simplifies secondary webpage operations, enhances user experience, and improves users' efficiency in browsing Internet information.

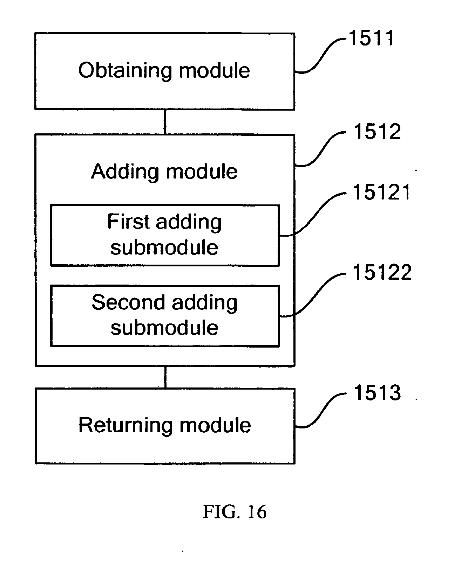

FIG. 16 shows the structure of the WAPGW provided in an embodiment of the present invention, comprising:
an obtaining module 1511, adapted to obtain the webpage requested by a terminal;
an adding module 1512, adapted to add script for secondary operation to the webpage obtained by the obtaining module 1511; and
a returning module 1513, adapted to return a webpage added with the script to the terminal for the terminal to perform a secondary operation on the script.

The adding module 1512 may comprise:
a first adding submodule 15121, adapted to add a script for secondary operation to the webpage using Referer contained in the HTTP head; and
a second adding submodule 15122, adapted to take an URL that the terminal currently visits as a transferring parameter and add the script for secondary operation on webpage to the webpage.

The WAPGW or adding module 1512 adds a script for secondary webpage operation to the webpage obtained by the obtaining module 1511. The returning module 1513 returns a webpage that is added with the script, enabling the terminal to perform a secondary operation on the script-added webpage and thus adding value to the webpage and enhancing user experience.

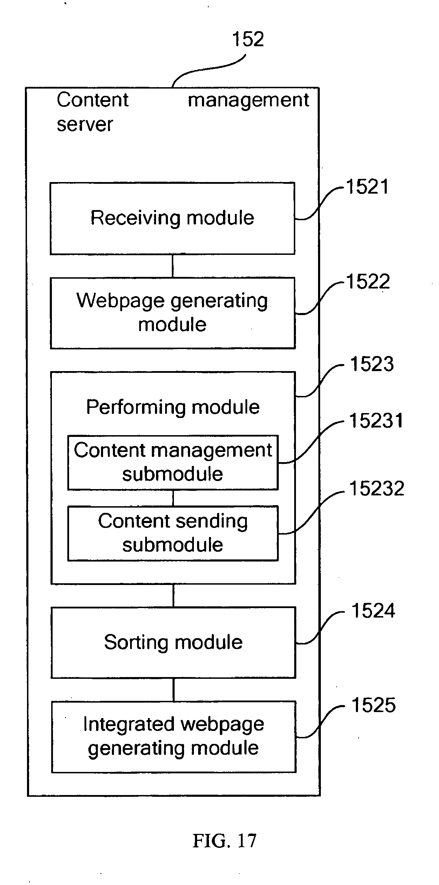

FIG. 17 shows the structure of the content management server provided in an embodiment of the present invention, comprising:
a receiving module 1521, adapted to receive from a terminal request messages that contain the terminal ID and the URL the terminal currently visits;
a webpage generating module 1522, adapted to generate a webpage according to the title of the currently visited URL and return the webpage to the terminal; and
a performing module 1523, adapted to perform a secondary operation on the webpage corresponding to the currently visited URL according to the information the terminal sets on the returned generated webpage.

The performing module 1523 may comprise:
content management submodule 15231, adapted to manage webpages and store webpages collected or reported by a terminal. Specifically, the content management submodule 15231 can add, delete, modify, and query content or manage content by category.

The performing module 1523 further comprises:
a content sending submodule 15232, adapted to send webpage content managed by the content management submodule 15231. For example, when a terminal recommends webpage, the submodule sends the recommended content to the contacts set by the terminal. The content sending submodule 15232 can send content recommend by a terminal through a number of channels, such as WAPPUSH, SMS, Email, MMS or IM.

The content management server 152 further comprises:
a ranking module 1524, adapted to retrieve links to various webpages on which the secondary operation is performed stored on the content management server 152 and rank the links according to the number of the link repetitions; and
an integrated webpage generating module 1525, adapted to display the links ranked by the ranking module 1524 on a webpage to form an integrated webpage.

The foregoing content management server centrally manages webpages for secondary operation, thus enhancing the integration of these webpages. By eliminating the need to switch between platforms, this method simplifies operation on webpages from different websites, enhances user experience, and improves users' efficiency in browsing Internet information.

In an embodiment of the present invention, the user can perform a number of operations on a webpage, including recommend, collect, vote, report, give opinions or comments. The user's operations on the webpage can be recorded (as webpage visit traffic) and the user behavior statistics can also be collected. Then, the webpage content (links or part of the content) is displayed on the integrated webpage by operation type.

An embodiment of the present invention provides a method, system, and device for secondary operation on webpage, which supports secondary operations on Internet webpages to add value. Users can vote on, collect or share with others webpage content via a mobile phone, thus enhancing their feeling of participation and embodying their personal value. Through an embodiment of the present invention, users can report illegal websites and webpage content, thus contributing considerably to the construction of a harmonious society. Furthermore, users can obtain information from others, which in turn facilitates interpersonal communication and enhances their friendship. Moreover, operators can add extra consultation (advertisements) to user-recommended content to generate a new source of revenue and collection information regarding users' preference and consumption characteristics according to the recommended content. In addition, operators will be able to construct an integrated website that features strong user loyalty and integrates exciting Internet content.

Through the embodiments described above, those skilled in the art can understand clearly that the present invention can be implemented through hardware or software combined with a required general hardware platform. Based on the foregoing understanding, the technical solution discussed herein can be embodied through software products, which can be stored on nonvolatile storage media, such as CD-ROM, USB drive or removable hard disk. Combined with certain instructions, these software products enable a computer device, such as a personal computer, a server, and a network device, to implement the methods provided in the embodiments of the present invention.

It is understandable to those skilled in the art that the drawings specified herein illustrate a preferred embodiment only and that modules or workflows described in the drawings are not necessarily required for the implementation of the present invention.

It is also understandable to those skilled in the art that modules used in devices provided in an embodiment of the present invention can be located within the device provided in the embodiment as described herein or across one or more devices that differ from the embodiment. Modules in the forgoing embodiment can be combined into one module or split into a number of modules.

The embodiment numbers specified above are for illustration purpose only and do not indicate preferred embodiments.

Disclosed above are only a few specific embodiments of the present invention; however, the invention is not limited to these embodiments.

## Claims

1. A method of secondary operation on a webpage, comprising:
receiving, by a receiving module (1521) of a content management server (152), from a terminal a request message that contains an ID of the terminal and a Uniform Resource Locator, URL, that the terminal currently visits;
generating, by a webpage generating module (1522) of the content management server (152), a webpage according to a title of the currently visited URL and returning the generated webpage to the terminal;
setting, by the terminal, information on the generated webpage; and
performing, by a performing module (1523) of the content management server (152), a secondary operation on the webpage corresponding to the currently visited URL according to the information which the terminal sets on the returned generated webpage, wherein the secondary operation is collecting or reporting;
the method being **characterized by**,
if the request message is a collect request or report request, the information which the terminal sets on the generated webpage comprises at least one of: the ID of the terminal, title, website address, remarks, tag, webpage operation type and user storage time;
wherein performing, by the performing module (1523) of the content management server (152), the secondary operation on the webpage corresponding to the currently visited URL according to the information which the terminal sets on the generated webpage comprises:
storing, by a content management submodule (15231) of the content management server (152), the webpage corresponding to the currently visited URL that is collected or reported by the terminal;
the method further comprising:
retrieving, by a ranking module (1524) of the content management server (152), links of the stored webpages corresponding to the currently visited URL on which the secondary operation is performed;
ranking, by the ranking module (1524) of the content management server (152), the links according to the number of the link repetitions; and
presenting, by an integrated webpage generating module (1525) of the content management server (152), these links ranked by the ranking module (1524) on one webpage to generate an integrated webpage.

2. A content management server (152), comprising:
a receiving module (1521), configured to receive from a terminal a request message that contains an ID of the terminal and a Uniform Resource Locator, URL, that the terminal currently visits;
a webpage generating module (1522), configured to generate a webpage according to a title of the currently visited URL and return the generated webpage to the terminal which is configured to set information on the generated webpage; and
a performing module (1523), configured to perform a secondary operation on the webpage corresponding to the currently visited URL according to the information which the terminal sets on the returned generated webpage, wherein the secondary operation is collecting or reporting;
the content management server being **characterized by**,
if the request message is a collect request or report request, the information which the terminal sets on the generated webpage comprises at least one of: the ID of the terminal, title, website address, remarks, tag, webpage operation type and user storage time;
wherein the performing module (1523) comprises:
a content management submodule (15231), configured to manage content of the webpage, and store the webpage corresponding to the currently visited URL that is collected or reported by the terminal after receiving the collect or report request from the terminal;
the content management server (152) further comprising:
a ranking module (1524), configured to retrieve links of the stored webpages on which the secondary operation is performed stored on the content management server (152) and rank the links according to the number of the link repetitions; and
an integrated webpage generating module (1525), configured to display the links ranked by the ranking module on a webpage to form an integrated webpage.

## Patentansprüche

1. Verfahren einer sekundären Operation auf einer Webseite, umfassend:
Empfangen, durch ein Empfangsmodul (1521) eines Inhaltsverwaltungsservers (152) von einem Endgerät, einer Anforderungsnachricht, die eine ID des Endgeräts und einen "Uniform Resource Locator", URL, den das Endgerät gegenwärtig besucht, enthält;
Erzeugen, durch ein Webseiten-Erzeugungsmodul (1522) des Inhaltsverwaltungsservers (152), einer Webseite gemäß einem Titel des gegenwärtig besuchten URL und Zurücksenden der erzeugten Webseite zu dem Endgerät;
Einstellen, durch das Endgerät, von Informationen auf der erzeugten Webseite; und
Durchführen, durch ein Durchführungsmodul (1523) des Inhaltsverwaltungsservers (152), einer sekundären Operation auf der mit dem gegenwärtig besuchten URL korrespondierenden Webseite gemäß den Informationen, die das Endgerät auf der zurückgesandten erzeugten Webseite einstellt, wobei die sekundäre Operation Erfassen oder Berichten ist;
wobei das Verfahren **dadurch gekennzeichnet ist, dass**,
wenn die Anforderungsnachricht eine Erfassungsanforderung oder Berichtsanforderung ist, die Informationen, die das Endgerät auf der erzeugten Webseite einstellt, mindestens eines von Folgendem umfassen: die ID des Endgeräts, Titel, Webseiten-Adresse, Anmerkungen, Markierung, Webseiten-Operationstyp und Benutzerspeicherungszeit;
wobei Durchführen, durch das Durchführungsmodul (1523) des Inhaltsverwaltungsservers (152), der sekundären Operation auf der mit dem gegenwärtig besuchten URL korrespondierenden Webseite gemäß den Informationen, die das Endgerät auf der erzeugten Webseite einstellt, umfasst:
Speichern, durch ein Inhaltsverwaltungs-Untermodul (15231) des Inhaltsverwaltungsservers (152), der mit dem gegenwärtig besuchten URL korrespondierenden Webseite, die durch das Endgerät erfasst oder berichtet wird; das Verfahren ferner umfassend:
Abfragen, durch ein Rangeinteilungsmodul (1524) des Inhaltsverwaltungsservers (152), von Verknüpfungen der mit dem gegenwärtig besuchten URL korrespondierenden gespeicherten Webseiten, auf denen die sekundäre Operation durchgeführt wird;
Rangeinteilung, durch das Rangeinteilungsmodul (1524) des Inhaltsverwaltungsservers (152), der Verknüpfungen gemäß der Zahl der Wiederholungen der Verknüpfungen; und
Präsentieren, durch ein Modul (1525) zum Erzeugen integrierter Webseiten des Inhaltsverwaltungsservers (152), dieser durch das Rangeinteilungsmodul (1524) nach Rang eingeteilten Verknüpfungen auf einer Webseite, um eine integrierte Webseite zu erzeugen.

2. Inhaltsverwaltungsserver (152), umfassend:
ein Empfangsmodul (1521), konfiguriert zum Empfangen, von einem Endgerät, einer Anforderungsnachricht, die eine ID des Endgeräts und einen "Uniform Resource Locator", URL, den das Endgerät gegenwärtig besucht, enthält;
ein Webseiten-Erzeugungsmodul (1522), konfiguriert zum Erzeugen einer Webseite gemäß einem Titel des gegenwärtig besuchten URL und Zurücksenden der erzeugten Webseite zu dem Endgerät, das konfiguriert ist zum Einstellen von Informationen auf der erzeugten Webseite; und
ein Durchführungsmodul (1523), konfiguriert zum Durchführen einer sekundären Operation auf der mit dem gegenwärtig besuchten URL korrespondierenden Webseite gemäß den Informationen, die das Endgerät auf der zurückgesandten erzeugten Webseite einstellt, wobei die sekundäre Operation Erfassen oder Berichten ist;
wobei der Inhaltsverwaltungsserver **dadurch gekennzeichnet ist, dass**,
wenn die Anforderungsnachricht eine Erfassungsanforderung oder Berichtsanforderung ist, die Informationen, die das Endgerät auf der erzeugten Webseite einstellt, mindestens eines von Folgendem umfassen: die ID des Endgeräts, Titel, Webseiten-Adresse, Anmerkungen, Markierung, Webseiten-Operationstyp und Benutzerspeicherungszeit;
wobei das Durchführungsmodul (1523) umfasst:
ein Inhaltsverwaltungs-Untermodul (15231), konfiguriert zum Verwalten von Inhalt der Webseite und Speichern der mit dem gegenwärtig besuchten URL korrespondierenden Webseite, die durch das Endgerät erfasst oder berichtet wird, nach Empfangen der Erfassungs- oder Berichtsanforderung von dem Endgerät; der Inhaltsverwaltungsserver (152) ferner umfassend:
ein Rangeinteilungsmodul (1524), konfiguriert zum Abfragen von Verknüpfungen der gespeicherten Webseiten, auf denen die sekundäre Operation durchgeführt wird, gespeichert auf dem Inhaltsverwaltungsserver (152), und zur Rangeinteilung der Verknüpfungen gemäß der Zahl der Wiederholungen der Verknüpfungen; und
ein Modul (1525) zum Erzeugen integrierter Webseiten, konfiguriert zur Anzeige der durch das Rangeinteilungsmodul nach Rang eingeteilten Verknüpfungen auf einer Webseite, um eine integrierte Webseite zu bilden.

## Revendications

1. Procédé pour exécuter une opération secondaire sur une page Web, le procédé comprenant les étapes consistant à :
recevoir, par un module de réception (1521) d'un serveur de gestion de contenu (152), depuis un terminal, un message de demande qui contient un identificateur du terminal et un localisateur universel de ressource, dit URL, que le terminal visite actuellement ;
générer, par un module de génération de page Web (1522) du serveur de gestion de contenu (152), une page Web en accord avec un titre de l'URL actuellement visité et
renvoyer la page Web générée au terminal ;
définir, par le terminal, des informations sur la page Web générée ; et
exécuter, par un module d'exécution (1523) du serveur de gestion de contenu (152), une opération secondaire sur la page Web correspondant à l'URL actuellement visité en accord avec les informations que le terminal définit sur la page Web générée renvoyée, l'opération secondaire représentant une collecte ou un signalement ;
le procédé étant **caractérisé en ce que**,
si le message de demande est une demande de collecte ou une demande de signalement, les informations que le terminal définit sur la page Web générée comprennent au moins un des éléments suivants : l'identificateur du terminal, un titre, une adresse de site Web, des commentaires, une étiquette, un type d'opération sur la page Web et un temps de stockage d'utilisateur ;
laquelle étape consistant à exécuter, par le module d'exécution (1523) du serveur de gestion de contenu (152), l'opération secondaire sur la page Web correspondant à l'URL actuellement visité en accord avec les informations que le terminal définit sur la page Web générée comprend l'étape consistant à :
stocker, par un sous-module de gestion de contenu (15231) du serveur de gestion de contenu (152), la page Web correspondant à l'URL actuellement visité qui est collectée ou signalée par le terminal ;
le procédé comprenant en outre les étapes consistant à :
extraire, par un module de classement (1524) du serveur de gestion de contenu (152), des liens des pages Web stockées correspondant à l'URL actuellement visité sur lesquelles l'opération secondaire est exécutée ;
classer, par le module de classement (1524) du serveur de gestion de contenu (152), les liens en accord avec le nombre des répétitions de liens ; et
présenter, par un module de génération de page Web intégrée (1525) du serveur de gestion de contenu (152), ces liens classés par le module de classement (1524) sur une page Web pour générer une page Web intégrée.

2. Serveur de gestion de contenu (152), comprenant :
un module de réception (1521), configuré pour recevoir depuis un terminal un message de demande qui contient un identificateur du terminal et un localisateur universel de ressource, dit URL, que le terminal visite actuellement ;
un module de génération de page Web (1522), configuré pour générer une page Web en accord avec un titre de l'URL actuellement visité et renvoyer la page Web générée au terminal qui est configuré pour définir des informations sur la page Web générée ; et
un module d'exécution (1523), configuré pour exécuter une opération secondaire sur la page Web correspondant à l'URL actuellement visité en accord avec les informations que le terminal définit sur la page Web générée renvoyée, l'opération secondaire représentant une collecte ou un signalement ;
le serveur de gestion de contenu étant **caractérisé en ce que**,
si le message de demande est une demande de collecte ou une demande de signalement, les informations que le terminal définit sur la page Web générée comprennent au moins un des éléments suivants : l'identificateur du terminal, un titre, une adresse de site Web, des commentaires, une étiquette, un type d'opération sur la page Web et un temps de stockage d'utilisateur ;
lequel module d'exécution (1523) comprend :
un sous-module de gestion de contenu (15231), configuré pour gérer le contenu de la page Web, et stocker la page Web correspondant à l'URL actuellement visité qui est collectée ou signalée par le terminal après avoir reçu la demande de collecte ou de signalement depuis le terminal ;
le serveur de gestion de contenu (152) comprenant en outre :
un module de classement (1524), configuré pour extraire des liens des pages Web stockées sur lesquelles l'opération secondaire est exécutée stockées sur le serveur de gestion de contenu (152) et classer les liens en accord avec le nombre des répétitions de liens ; et
un module de génération de page Web intégrée (1525), configuré pour afficher les liens classés par le module de classement sur une page Web pour former une page Web intégrée.
